# EUROPÄISCHE PATENTSCHRIFT

(11) **EP 2 072 881 B1**
(45) Veröffentlichungstag und Bekanntmachung des Hinweises auf die Patenterteilung: **06.05.2015**
(21) Anmeldenummer: 08018283.5
(22) Anmeldetag: 18.10.2008
(51) Int. Cl.: B08B 9/055, B05B 12/14

(54) **Einrichtung und Verfahren zur berührungslosen Bestimmung einer Zustandsgröße, insbesondere der Position, wenigstens eines Molches**
Method and device for non-contact determination of a state variable, particularly the position of at least one pig
Dispositif et procédé de détermination sans contact d'une grandeur d'état, notamment de la position, d'au moins un écouvillon

(30) Priorität: 17.11.2007 DE 102007054969
(43) Veröffentlichungstag der Anmeldung: 24.06.2009
(73) Patentinhaber: Eisenmann AG, 71032 Böblingen (DE)
(72) Erfinder: Hablizel, Andreas, 72770 Reutlingen (DE)
(74) Vertreter: Ostertag, Ulrich

(56) Entgegenhaltungen:
- EP-A- 0 161 689
- DE-A1- 2 525 937
- DE-A1- 10 119 703
- DE-A1- 10 220 676
- DE-A1- 10 309 143
- GB-A- 2 340 245
- US-B1- 6 965 320

## Beschreibung

Die Erfindung betrifft eine Einrichtung zur berührungslosen Bestimmung einer Zustandsgröße wenigstens eines Molches, der in einem Versorgungsweg verschiebbar ist und der eine Magnetfeldquelle umfasst nach dem Oberbegriff des Patentanspruchs 1.

Außerdem betrifft die Erfindung ein Verfahren zur berührungslosen Bestimmung einer Zustandsgröße wenigstens eines Molches, der in einem Versorgungsweg verschoben wird und von dem eine Magnetfeldquelle mitgeführt wird nach dem Oberbegriff des Patentanspruchs 12.

In der Beschichtungstechnik ist es weit verbreitet, Beschichtungsmaterial mit Hilfe eines Molches durch einen Schlauch beispielsweise von einer Versorgungsquelle an einen anderen Ort, insbesondere zu einer Applikationseinrichtung, zu befördern. Der Molch kann auch alleine beispielsweise zur Reinigung des Schlauchs verfahren werden. Die Bewegung des Molches, insbesondere dessen Anwesenheit an den verschiedenen Molchstationen, wird mit Hilfe von Einrichtungen der eingangs genannten Art überwacht.

Aus der DE 102 20 676 B4 sind eine derartige Einrichtung und ein derartiges Verfahren bekannt, bei der/dem in einem Molch ein Magnet integriert ist. Bei der Anwesenheit des Molches in einer Molchstation wird der Magnet mit Hilfe eines Sensors erkannt, in dem ein Magnetfeld-empfindlicher Schalter integriert ist. Eine Schaltungsanordnung erzeugt aus einem Sensorsignal ein elektrisches Ausgangssignal, das für die An- oder Abwesenheit des Molches am Sensor repräsentativ ist.

Auch aus der DE 25 25 937 A1 ist eine Einrichtung der eingangs genannten Art bekannt geworden. Im Inneren eines Molches ist dort ebenfalls ein Magnet vorgesehen, dessen Magnetfeld durch eine Doppelspule erkannt wird, die sich im Bereich eines Metallflansches befindet, der in einem Molchrohr eingebracht ist. Alternativ ist auch daran gedacht, dass anstelle des Magneten sich ein magnetisierbares Material im Inneren des Molches befindet. In diesem Fall ist innerhalb der Doppelspule zusätzlich eine Feldspule vorgesehen.

Häufig ist es jedoch erforderlich, außer der An- oder Abwesenheit des Molches an bestimmten Stellen noch weitere Zustandsgrößen des Molches, vorzugsweise dessen Geschwindigkeit, seine genaue Position im Molchschlauch auch zwischen den Molchstationen und/oder die von ihm zurückgelegte Wegstrecke, zu erhalten. Darüber hinaus werden oft auch einen Transportzustand von zu förderndem Beschichtungsmaterial kennzeichnende Zustandsgrößen, vorzugsweise das Volumen und/oder der Volumenstrom des transportierten Beschichtungsmaterials, benötigt.

Aufgabe der vorliegenden Erfindung ist es, eine Einrichtung und ein Verfahren der eingangs genannten Art so auszugestalten, dass auf einfachem Wege möglichst viel Information über die Zustandsgrößen des Molches und möglichst auch über den Transportzustand des Beschichtungsmaterials erhalten werden. Darüber hinaus soll die Einrichtung möglichst verschleißfrei arbeiten.

Diese Aufgabe wird, was die Einrichtung anbelangt, erfindungsgemäß durch eine Einrichtung mit den im Patentanspruch 1 angegebenen Merkmalen gelöst.

Erfindungsgemäß kann also das Magnetfeld des Molchs beim Durchfahren des Molchschlauches in jedem Sensor ein Sensorsignal erzeugen. Auf diese Weise kann der Molch möglichst lückenlos entlang des Versorgungsweges verfolgt werden. Dies ermöglicht eine optimale Bestimmung des Ortes und der Geschwindigkeit des Molches.

Dabei hat die Schaltungsanordnung Mittel zur Bestimmung von elektrischen Ausgangssignalen, die für wenigstens eine der folgenden Zustandsgrößen des Molches und/oder eines zu fördernden Beschichtungsmaterials repräsentativ sind, aus den Sensor-Ausgangssignalen:
a) die Position des Molches auf dem Versorgungsweg,
b) die vom Molch auf dem Versorgungsweg zurückgelegte Wegstrecke,
c) das mit dem Molch beförderte Volumen an Beschichtungsmaterial,
d) den Volumenstrom des mit dem Molch beförderten Beschichtungsmaterials.

Bei einer vorteilhaften Ausführungsform umfassen die Sensoren jeweils wenigstens eine Leiterwicklung, die spulenartig um den Versorgungsweg herum angeordnet ist, deren Enden mit entsprechenden Signaleingängen der Schaltungsanordnung verbunden sind, wobei zwischen den Enden der Leiterwicklung ein die Bewegung des Molches im Bereich der Leiterwicklung charakterisierendes, mit der Magnetfeldquelle induziertes Wechselspannungs-Sensorausgangssignal anliegt. Es kann also eine Vielzahl von Leiterwicklungen als Einzelspulen um den Versorgungsweg, vorzugsweise einen Molchschlauch oder ein Rohr, gewickelt oder als separate Bauteile auf einem jeweiligen Spulenkern über den Versorgungsweg geschoben sein. Die Leiterwicklungen wirken als Statoren von linear angeordneten Generatoren. Der magnetisch wirkende Molch hat dabei die Funktion des Läufers. Bei der Bewegung des Molches entlang des Versorgungsweges wird durch das Magnetfeld beim Durchgang durch die Leiterwicklung insgesamt ein Wechselspannungsimpuls induziert. Die Polarität des Wechselspannungsimpulses beim Ausfahren aus der Leiterwicklung ist zu der Polarität beim Einfahren entgegengesetzt. Aus diesem Wechselspannungsimpuls kann einfach die Anwesenheit des Molches bei beziehungsweise in der Leiterwicklung erfasst und so die Position des Molches ermittelt werden. Die Leiterwicklung kann darüber hinaus einfach mit einer abgeschirmten Zweidrahtleitung mit der Schaltungsanordnung verbunden sein. Die Erfassung der Zustandsgrößen des Molches ist darüber völlig verschleißfrei, da die Leiterwicklung im Unterschied zu dem aus dem Stand der Technik bekannten Magnetfeld-empfindlichen Schalter keine beweglichen Teile enthält. Leiterwicklungen benötigen außerdem keine Energieversorgung, um betrieben zu werden.

Bei einer weiteren vorteilhaften Ausführungsform umfassen die Sensoren jeweils ein Hall-Element, insbesondere einen Hall-Schalter. Hall-Elemente sind kleine, kompakte und robuste Bauteile. Hall-Schalter haben den Vorteil, dass sie bereits ein digitales Ausgangssignal liefern, sobald sich die Magnetfeldquelle in ihrer Nähe befindet. Das digitale Ausgangssignal muss nur noch bezüglich seines Pegels für die nachfolgende Schaltungsanordnung angepasst werden. Aufgrund ihrer kleinen Dimension kann eine Vielzahl von Hall-Elementen dicht auf verhältnismäßig kleinem Raum untergebracht und so die Ortsauflösung der Positionserkennung des Molches verbessert werden.

Um die Ortsauflösung bei der Erfassung des Molches zu verbessern, können die Sensoren insbesondere gleichmäßig verteilt, vorzugsweise spiralförmig, um den Versorgungsweg angeordnet sein.

Besonders einfach, störungsunanfällig und preisgünstig kann die Magnetfeldquelle des Molches ein Permanentmagnet oder ein Ferritkern sein.

Um die Wechselspannungs-Sensorausgangssignale der Leiterwicklungen einfach mit einer Logikschaltung verarbeiten zu können, kann die Schaltungsanordnung Mittel zur Umformung des Wechselspannungs-Sensorausgangssignals in ein Rechtecksignal aufweisen.

Zweckmäßigerweise kann die Schaltungsanordnung Mittel zur Invertierung des negativen oder des positiven Anteils des Wechselspannungs-Sensorausgangssignals oder eines hieraus abgeleiteten Wechselspannungssignals aufweisen. Auf diese Weise können die beiden Anteile gleichgerichtet und deren Pegel einfach zur Weiterverarbeitung in einer nachfolgenden Logikschaltung angepasst werden.

Um einfach die Anzahl von durchlaufenen Sensoren zu ermitteln, kann die Schaltungsanordnung Mittel zur Zählung von Sensorausgangssignalen oder hieraus abgeleiteten Signalimpulsen aufweisen. Aus der Anzahl der Sensorausgangssignale kann einfach die zurückgelegte Wegstrecke und daraus die Position des Molchs bestimmt werden.

Ferner kann die Schaltungsanordnung ein Zeitglied aufweisen, mit dem ein Zeitfenster vorgegeben werden kann, und durch Zählung der Sensorausgangsimpulse in dem Zeitfenster kann die Geschwindigkeit ermittelt werden. Auf diese Weise kann mit der Schaltungsanordnung aus der vom Molch zurückgelegten Wegstrecke die Geschwindigkeit des Molchs und daraus ein Volumenstrom des Beschichtungsmittels berechnet werden.

Vorteilhafterweise kann die Schaltungsanordnung Mittel zur Erfassung der Reihenfolge von negativen und positiven Anteilen des Wechselspannungs-Sensorausgangssignals aufweisen. So können Störungsimpulse erkannt und ignoriert werden, falls die Reihenfolge von negativen und positiven Anteilen nicht alterniert. Dies kann beispielsweise beim Vorliegen von Störimpulsen der Fall sein.

Unter Kostengesichtspunkten besonders günstig ist es, wenn die parallel geschalteten Sensoren identisch sind.

Die Aufgabe wird, was das erfindungsgemäße Verfahren betrifft, durch ein Verfahren mit den im Patentanspruch 12 angegebenen Merkmalen gelöst.

Auf diese Weise wird einfach und verschleißfrei die Bewegung und die Position des Molches im Molchschlauch fast lückenlos erfasst.

Dabei werden aus den Sensorausgangssignalen elektrische Ausgangssignale, die für wenigstens einen der folgenden Zustandsgrößen des Molches und/oder eines zu fördernden Beschichtungsmaterials repräsentativ sind, ermittelt:
a) die Position des Molches auf dem Versorgungsweg,
b) die vom Molch auf dem Versorgungsweg zurückgelegte Wegstrecke,
c) das mit dem Molch beförderte Volumen an Beschichtungsmaterial,
d) den Volumenstrom des mit dem Molch beförderten Beschichtungsmaterials.

So kann auf einfachem Wege mit einem geringen sensorischen Aufwand eine Vielzahl von Informationen über das Molchsystem, insbesondere dessen Funktionsfähigkeit und seine Funktionszustände, ermittelt werden. Es kann so auch der Verschleiß von Molchen während des Betriebs erkannt werden.

Bei einer vorteilhaften Ausgestaltung des Verfahrens wird mit der Magnetfeldquelle in jeweiligen Leiterwicklung der Sensoren, die spulenartig um den Versorgungsweg herum angeordnet sind, ein die Bewegung des Molches im Bereich der Leiterwicklung charakterisierendes Wechselspannungs-Sensorausgangssignal induziert. Wechselspannungssignale können einfach erfasst und auf etwaige Störimpulse überprüft werden.

Bei einer anderen vorteilhaften Ausgestaltung des Verfahrens werden mit jeweiligen Hallelementen, insbesondere Hall-Schaltern, eine die Bewegung der Magnetfeldquelle charakterisierende Hallspannung oder ein digitales Ausgangssignal erzeugt. Hall-Elemente sind sehr kompakt, so das sie in großer Dichte entlang des Versorgungsweges angebracht werden können, um eine hohe Ortsauflösung zu erhalten. Mit Hall-Schaltern werden bereits digitale Signale ausgegeben, die einfach mit der Schaltungsanordnung weiterverarbeitet werden können.

Weitere Vorteile, Merkmale und Einzelheiten der Erfindung ergeben sich aus der nachfolgenden Beschreibung, in der einige Ausführungsbeispiele der Erfindung anhand der Zeichnung näher erläutert werden; es zeigen
- Figur 1: eine erste Einrichtung zur Detektion eines einen magnetisierten Ferritkern enthaltenen Molches, bei der ein Molchschlauch mit einer Vielzahl von Einzelspulen umwickelt ist;
- Figur 2: ein Spannungs-Zeit-Diagramm, in dem sinusförmige Wechselspannungs-Ausgangsimpulse dargestellt sind, die mit einer Schaltungsanord-nung beim Durchlaufen des Molches aus in den Einzelspulen induzierten Wechselspannungs-Ausgangssignalen erzeugt werden;
- Figur 3: ein weiteres Spannungs-Zeit-Diagramm, in dem Rechtecksignale dargestellt sind, die aus den sinusförmigen Wechselspannungs-Ausgangsimpulsen der Figur 2 ermittelt werden;
- Figur 4: ein Positions-Zeit-Diagramm mit einer Stufendarstellung der Bewegung des Molches in dem Molchschlauch der Figur 1;
- Figur 5: eine zweite Molchdetektionseinrichtung, die zu der in den Figuren 1 bis 4 gezeigten ähnlich ist, bei der eine Vielzahl von Hall-Schaltern in einem einzigen geraden Strang entlang des Molchschlauchs angeordnet ist;
- Figur 6: einen Längsschnitt eines Molchschlauchs mit einer dritten Molchdetektionseinrichtung, die zu der in der Figur 5 gezeigten ähnlich ist, bei der eine Vielzahl von Hall-Schaltern auf vier gerade Stränge verteilt insgesamt spiralförmig entlang des Molchschlauchs angeordnet ist;
- Figur 7: einen Querschnitt der Molchdetektionseinrichtung aus der Figur 6;
- Figur 8: einen Längsschnitt eines Molchschlauchs mit einer vierten Molchdetektionseinrichtung, die zu der aus den Figuren 6 und 7 ähnlich ist, bei der die Hall-Schalter auf drei gerade Stränge verteilt sind;
- Figur 9: einen Querschnitt der Molchdetektionseinrichtung aus der Figur 8;
- Figur 10: einen Längsschnitt eines Molchschlauchs mit einer fünften Molchdetektionseinrichtung, die zu der aus den Figuren 6 bis 9 ähnlich ist, bei der die Hall-Schalter auf zwei gerade Stränge verteilt sind;
- Figur 11: einen Querschnitt der Molchdetektionseinrichtung aus der Figur 10.

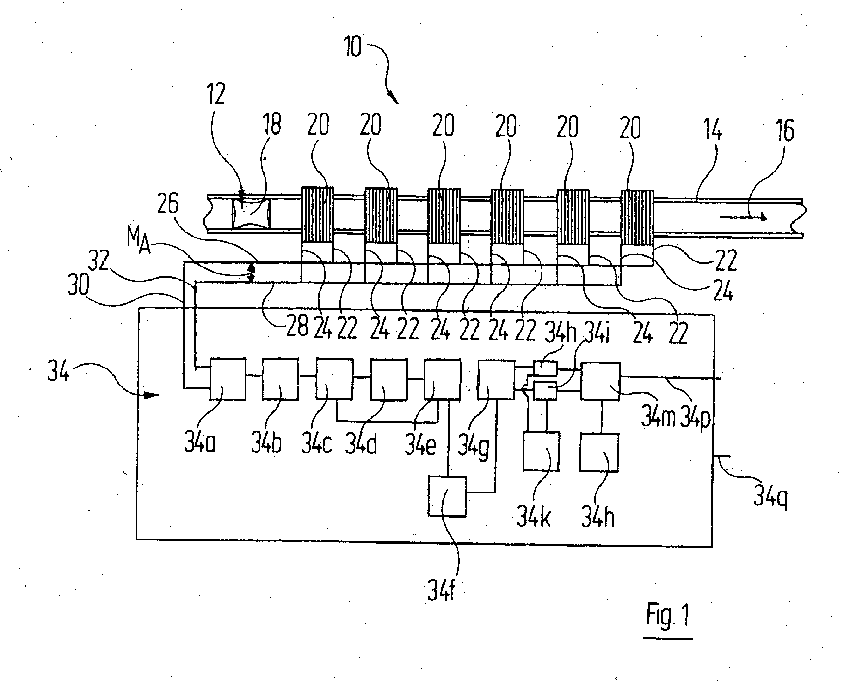

In Figur 1 ist eine insgesamt mit dem Bezugszeichen 10 versehene Einrichtung zur Detektion eines Molches 12 in einem Molchschlauch 14 gezeigt.

Der Molchschlauch 14 bildet einen Versorgungsweg für Lack, welcher von einer in der Figur 1 nicht gezeigten Versorgungsquelle zu einer hier nicht weiter interessierenden Applikationseinrichtung, beispielsweise einer Spritzpistole, befördert wird.

Der Molch 12 ist in dem Molchschlauch 14 verfahrbar und schiebt so den Lack in bekannter Weise in Bewegungsrichtung (Pfeil 16) vor sich her.

Der Molch 12 ist vorzugsweise ein gummiartiger, kreiszylindrischer Stopfen. Das Außenprofil des Molches 12 senkrecht zur Bewegungsrichtung 16 entspricht dem Innenprofil des Molchschlauchs 14, so dass der Molch 12 möglichst dicht und dennoch mit geringen Reibungsverlusten an der Innenwand des Molchschlauchs 14 entlang gleiten kann. In seinem Inneren weist der Molch 12 einen magnetischen Kern 18, beispielsweise einen Ferritkern, auf.

Um den Molchschlauch 14 herum ist in Bewegungsrichtung 16 hintereinander in gleichem Abstand eine Mehrzahl von identischen Einzelspulen 20 mit gleichem Wickelsinn zylindrisch aufgewickelt. Die Einzelspulen 20 weisen jeweils einen isolierten, elektrisch leitfähigen Spulendraht auf, der in einer oder mehreren Lagen um den Molchschlauch 14 gewickelt ist.

Die Einzelspulen 20 sind polaritätsgleich parallel geschaltet. Die in Bewegungsrichtung 16 hinteren Enden 22 der Spulendrähte sind hierzu mit einer ersten Signalleitung 26 verbunden, die zu einem ersten Eingang 30 einer Schaltungsanordnung 34 führt. Die in Bewegungsrichtung 16 vorderen Enden 24 der Spulendrähte sind mit einer zweiten Signalleitung 28 verbunden, die zu einem zweiten Eingang 32 der Schaltungsanordnung 34 führt. Die Signalleitungen 26 und 28 sind als abgeschirmte Doppelleitung realisiert.

Beim Durchlaufen des Molches 12 durch den Bereich einer Einzelspule 20 wird durch das Magnetfeld des Ferritkerns 18 ein Wechselspannungs-Sensorausgangssignal U_{A} in der Einzelspule 20 induziert.

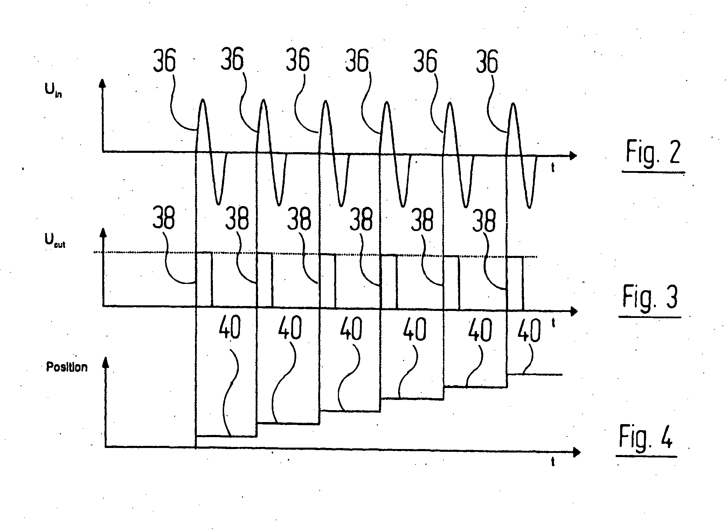

Das Wechselspannungs-Sensorausgangssignal U_{A} wird über die Signalleitungen 26 und 28 der Schaltungsanordnung 34 zugeführt. Die Schaltungsanordnung 34 weist einen Filter 34a auf, mit dem das Wechselspannungs-Sensorausgangssignal U_{A} zunächst gefiltert wird. Dann wird das gefilterte jetzt sinusförmige Signal mit einem entsprechenden Verstärker 34b zur weiteren Signalverarbeitung zu sinusförmigen Wechselspannungs-Ausgangsimpulsen 36 (Figur 2) verstärkt.

Die Wechselspannungs-Ausgangsimpulse 36, die beim Verfahren des Molches 12 in Bewegungsrichtung 16 durch die Einzelspulen 20 entstehen, sind in Figur 2 in einem Spannungs(Uᵢₙ₎-Zeit(t)-Diagramm gezeigt. Beim gleichmäßigen Verfahren des Molches 12 mit konstanter Geschwindigkeit sind die Wechselspannungs-Ausgangsimpulse 36 identisch, da auch die Einzelspulen 20 identisch sind.

Die Polarität der Wechselspannungs-Ausgangsimpulse 36 beim Einfahren des Molches 12 in eine der Einzelspulen 20 ist der Polarität beim Ausfahren aus dem Bereich der Einzelspule 20 entgegengesetzt. Beim Eintritt des Molches 12 in den Bereich der Einzelspulen 20 wird bei dem in der Figur 1 gezeigten Aufbau zunächst eine positive Halbwelle, in Figur 2 oben, erzeugt. Beim Austritt aus dem Bereich der Einzelspulen 20 wird eine negative Halbwelle, in Figur 2 unten, erzeugt. In den Bereichen zwischen den Einzelspulen 20 fällt die Spannung Uᵢₙ nahezu auf Null ab.

Die Schaltungsanordnung 34 weist darüber hinaus eine Komparatorschaltung 34c auf, mit der die positiven Halbwellen der Wechselspannungs-Ausgangsimpulse 36 von den negativen Halbwellen getrennt werden können. Sowohl bei der positiven als auch bei der negativen Halbwelle wird dabei auch das Signalrauschen herausgefiltert, da dessen Signalpegel unterhalb des Vergleichspegels des Komparators liegen.

Die negativen Halbwellen werden mit einem Inverter 34d der Schaltungsanordnung 34 invertiert.

Beide Halbwellen werden mit einem Impulsformer 34e in Rechtecksignale umgewandelt. Die aus den positiven Halbwellen der Wechselspannungs-Ausgangsimpulse 36 erzeugten Rechtecksignale 38 sind in der Figur 3 in einem weiteren Spannungs(Uₒᵤₜ)'Zeit(t)-Diagramm gezeigt.

Die Rechtecksignale 38 aus den positiven Halbwellen und die nicht gezeigten Rechtecksignale aus den negativen Halbwellen werden mit einer nachgeschalteten Logikschaltung 34f der Schaltungsanordnung 34 weiter verarbeitet. Mit der Logikschaltung 34f wird überprüft, ob jeder positiven Halbwelle eine negative Halbwelle folgt. Eine derartige alternierende Polarität ist bei einer fehlerfreien Erfassung der Wechselspannungs-Sensorausgangssignale U_{A} beim Durchlaufen des Molches 12 zwingend. Falls ein Fehler in der Reihenfolge erkannt wird, wird das Wechselspannungs-Sensorausgangssignal U_{A}, dessen Polarität nicht in die Reihenfolge passt, von der Logikschaltung 34f nicht weiter berücksichtigt.

Die Rechtecksignale 38 aus den positive Halbwellen der Wechselspannungs-Ausgangsimpulse 36 werden mit einem Verstärker 34g in der Schaltungsanordnung 34 auf einen Pegel gebracht, auf dem sie mit einer nachfolgenden Zählerschaltung 34h der Schaltungsanordnung 34 gezählt werden können.

Die negativen Halbwellen der Wechselspannungs-Ausgangsimpulse 36 werden ebenfalls zu positiven Rechteckimpulsen umgeformt und mit einer weiteren Zählerschaltungen 34i gezählt. Bei der folgenden Plausibilitätsprüfung der Wechselspannungs-Ausgangsimpulse 36 wird mit den beiden Zählerschaltungen 34h und 34i geprüft, ob die Gesamtzahl der Rechtecksignale, also die Rechtecksignale aus den positiven und den negativen Halbwellen, ein geradzahliges Vielfaches der Anzahl der durchlaufenen Einzelspulen 20 ist. Ist dies nicht der Fall, liegt ein Fehler bei der Zählung oder ein Störimpuls vor.

Ferner wird mit einem Zeitglied 34k der Schaltungsanordnung 34 ein Zeitfenster vorgegeben. Mit der Schaltungsanordnung 34 wird die Geschwindigkeit des Molches 12 bestimmt, indem die Anzahl der aus den positiven Halbwellen hervorgegangene Rechtecksignale 38 in dem Zeitfenster ermittelt wird.

Aus der Anzahl der Rechtecksignale 38 wird die Position des Molches 12 in dem Molchschlauch 14 ermittelt. Hierzu wird mit der Schaltungsanordnung 34 mit jedem Rechtecksignal 38 ein vorgegebener Wert zu einem bestimmten Anfangspositionswert addiert. Der vorgegebene Wert entspricht dem Abstand zwischen den in Bewegungsrichtung 16 vorderen Eingangsseiten zweier benachbarter Einzelspulen 20. Dies ist nämlich die Wegstrecke, die der Molch 12 zwischen zwei Rechtecksignalen 38 zurücklegt.

In der Figur 4 ist ein stufenförmiges Positions-Zeit-Diagramm für die Position des Molches 12 gezeigt, welches aus dem Verlauf der Rechtecksignale 38 aus der Figur 3 hervorgeht. Jede Stufe 40 entspricht dabei der Position einer Einzelspule 20 auf dem Molchschlauch 14 relativ zu der in Bewegungsrichtung 16 ersten Einzelspule 20.

Um die vom Molch 12 zurückgelegte Wegstrecke zwischen zwei Einzelspulen 20 zu bestimmen, wird die Anzahl der Impulse gezählt, die während der Bewegung des Molches 12 in dem Zeitfenster ermittelt werden.

Durch Multiplikation der vom Molch 12 zurückgelegte Wegstrecke mit dem bekannten Querschnitt des Molchschlauchs 14 wird ferner das Volumen des beförderten Lacks bestimmt.

Durch Multiplikation des Volumens pro Längeneinheit des beförderten Lacks mit der Geschwindigkeit des Molches 12 wird der Volumenstrom des Lacks mit der Schaltungsanordnung 34 berechnet.

Separate Messzellen, mit denen die Menge des Lacks dosiert wird, sind so nicht erforderlich.

Die ermittelten Zustandsgrößen Position des Molches 12, zurückgelegte Wegstrecke, Volumen des beförderten Lacks und Volumenstrom des Lacks werden über eine Schnittstelle 34q der Schaltungsanordnung 34 beispielsweise einer nicht gezeigten Anzeige oder einer hier nicht weiter interessierenden Steuereinheit des Molchsystems übermittelt.

Die Schaltungsanordnung 34 weist darüber hinaus eine Verschleißprüfungsschaltung 34m für den Molch 12 und den Molchschlauch 14 auf. Mit der Verschleißprüfungsschaltung 34m wird die Ist-Molchgeschwindigkeit mit einer Soll-Molchgeschwindigkeit verglichen, die als Masterkurve für die entsprechenden Randbedingungen, beispielsweise die Art des Lacks, in einer Speichereinheit 34n gespeichert ist. Befindet sich die Ist-Molchgeschwindigkeit außerhalb eines vorgegebenen Toleranzbereichs um die Soll-Molchgeschwindigkeit, so wird an einer Schnittstelle 34p der Schaltungsanordnung 34 ein Warnsignal ausgegeben. Das Warnsignal kann ebenfalls der Anzeige oder der Steuereinheit des Molchsystems übermittelt werden.

Eine solche Abweichung der Ist-Molchgeschwindigkeit von der Soll-Molchgeschwindigkeit kann beispielsweise durch Verschleiß des Molchs 12 und/oder des Molchschlauchs 14 hervorgerufen werden. Der Grund kann aber auch ein Leck im Molchschlauch 14 sein, aus dem Lack austritt. Durch den Verlust von Lack verringert sich der mechanische Widerstand, der auf den Molch 12 wirkt, so dass dieser schneller fährt. Auf diese Weise ist auch einfach eine Dichtheitsprüfung des Molchsystems realisiert.

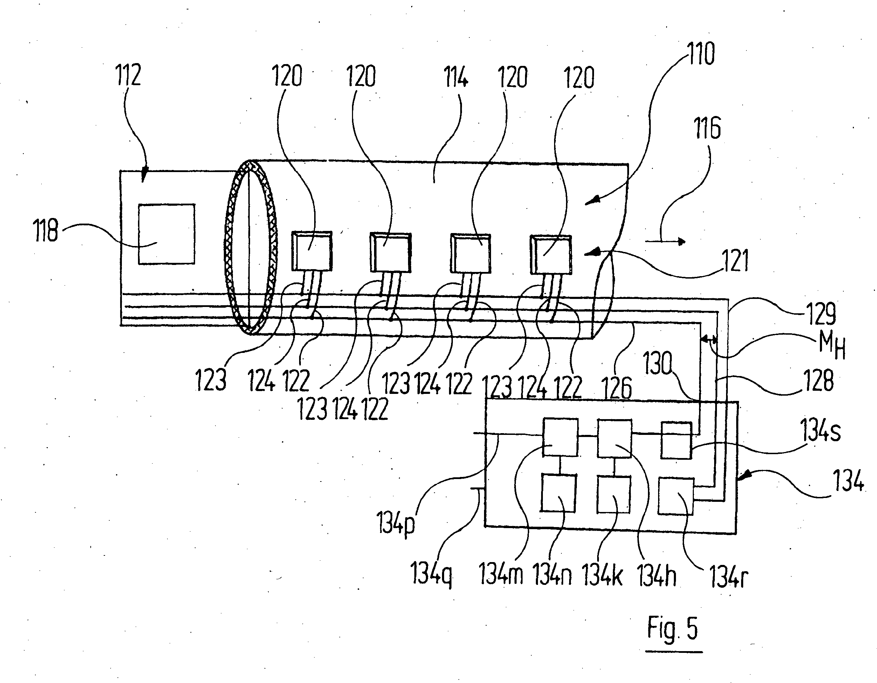

Bei einem zweiten Ausführungsbeispiel, dargestellt in der Figur 5, sind diejenigen Elemente, die zu denen des ersten, in den Figuren 1 bis 4 beschriebenen Ausführungsbeispiels ähnlich sind, mit denselben Bezugszeichen zuzüglich 100 versehen, so dass bezüglich deren Beschreibung auf die Ausführungen zum ersten Ausführungsbeispiel Bezug genommen wird. Dieses Ausführungsbeispiel unterscheidet sich von ersten dadurch, dass statt der Einzelspulen 20 eine Vielzahl von an sich bekannten Hall-Schaltern 120 als Sensoren verwendet werden. Die Hall-Schalter 120 sind in Form eines einzigen geraden Strangs 121 äquidistant in Bewegungsrichtung 116 hintereinander am Molchschlauch 114 angeordnet.

Die Hall-Schalter 120 sind außen an der Umfangsseite des Molchschlauchs 114 befestigt.

Der Strang 121 erstreckt sich parallel zur Achse des Molchschlauchs 112.

Bei den Hall-Schaltern 120 handelt es sich um unipolare oder bipolare Hallsensorschalter.

Jeder Hall-Schalter 120 verfügt über einen Signalanschluss 122, einen Masseanschluss 124 und einen Versorgungsspannungsanschluss 123.

Über die Versorgungsspannungsanschlüsse 123 werden die Hall-Schalter 120 mit einer Versorgungsspannung gespeist. Die Versorgungsspannung wird über eine zentrale Versorgungsspannungsleitung 129 von einer Spannungsquelle 134r einer Schaltungsanordnung 134 bereitgestellt.

Die Masseanschlüsse 124 sind über eine zentrale Masseleitung 128 ebenfalls mit der Spannungsquelle 134r verbunden.

An dem Signalanschluss 122 liegt gegen Masse ein digitales Ausgangssignal in Form eines Spannungspulses U_{H} an, sobald der Molch 112 mit dem Ferritkern 118 in den Bereich des jeweiligen Hall-Schalters 120 kommt.

Die Hall-Schalter 120 sind funktional parallel geschaltet. Alle Signalanschlüsse 122 sind über eine zentrale Signalleitung 126 mit einem Signaleingang 130 der Schaltungsanordnung 134 verbunden.

Die digitalen Ausgangssignale U_{H} werden vom Signaleingang 130 aus einer Pegelschaltung 134s zugeführt, mit der der Pegel für die nachfolgende Zählerschaltung 134h angepasst wird.

Die Pegelschaltung 134s weist einen Vorwiderstand und eine Zenerdiode auf.

Am Ausgang der Pegelschaltung 134s liegt beim Vorbeilaufen des Molches 120 insgesamt ein Rechtecksignal in der Art des in der Figur 3 (erstes Ausführungsbeispiel) gezeigten Rechtecksignals an.

Das Rechtecksignal wird analog zum ersten Ausführungsbeispiel (Figuren 1 bis 4) mit Hilfe eines Zeitglieds 134k, einer Verschleißprüfungsschaltung 134m und einer Speichereinheit 134n zu den Signalen verarbeitet, die für die in Verbindung mit dem ersten Ausführungsbeispiel näher erläuterten Zustandsgrößen des Molches 112 beziehungsweise des Lacks repräsentativ sind, und an Schnittstellen 134p und 134q ausgegeben.

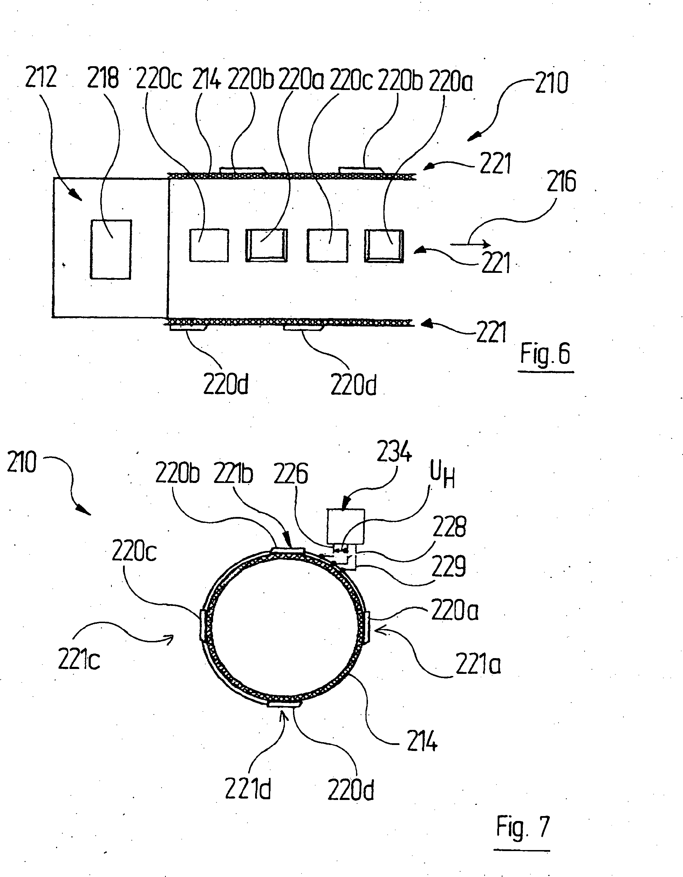

Bei einem dritten Ausführungsbeispiel, dargestellt in den Figuren 6 (Längsschnitt) und 7 (Querschnitt), sind diejenigen Elemente, die zu denen des zweiten, in der Figur 5 beschriebenen Ausführungsbeispiels ähnlich sind, mit denselben Bezugszeichen zuzüglich 100 versehen, so dass bezüglich deren Beschreibung auf die Ausführungen zum zweiten Ausführungsbeispiel Bezug genommen wird. Dieses Ausführungsbeispiel unterscheidet sich von zweiten dadurch, dass statt nur eines Strangs 121 von Hall-Schaltern 120 beim zweiten Ausführungsbeispiel vier Stränge 221a, 221b, 221c, 221d von Hall-Schaltern 220a, 220b, 220c, 220d vorgesehen sind. Die Stränge 221a, 221b, 221c, 221d verlaufen parallel zur Achse des Molchschlauchs 214 und sind in Umfangsrichtung des Molchschlauchs 214 gleichmäßig, im Querschnitt betrachtet (Figur 7) an den Ecken eines Quadrates, verteilt.

Die Hall-Schalter 220a, 220b, 220c, 220d der vier Stränge 221a, 221b, 221c, 221d sind dabei zueinander versetzt angeordnet, so dass die Hall-Schalter 220a, 220b, 220c, 220d insgesamt entlang einer gedachten Spirale um den Molchschlauch 214 platziert sind. Die Abstände von auf der gedachten Spirale aufeinanderfolgenden Hall-Schaltern 220 benachbarter Stränge 221 sind so bemessen, dass beim Bewegen des Molches 212 eine lückenlose Verfolgung desselben mit höherer Ortsauflösung als mit nur einem Strang möglich ist, wobei die Ausgangssignale U_{H} von den Hall-Schaltern 220 gerade noch separat erfassbar sind. Alle Hall-Schalter 220a, 220b, 220c, 220d sind analog zum zweiten Ausführungsbeispiel funktional parallel geschaltet.

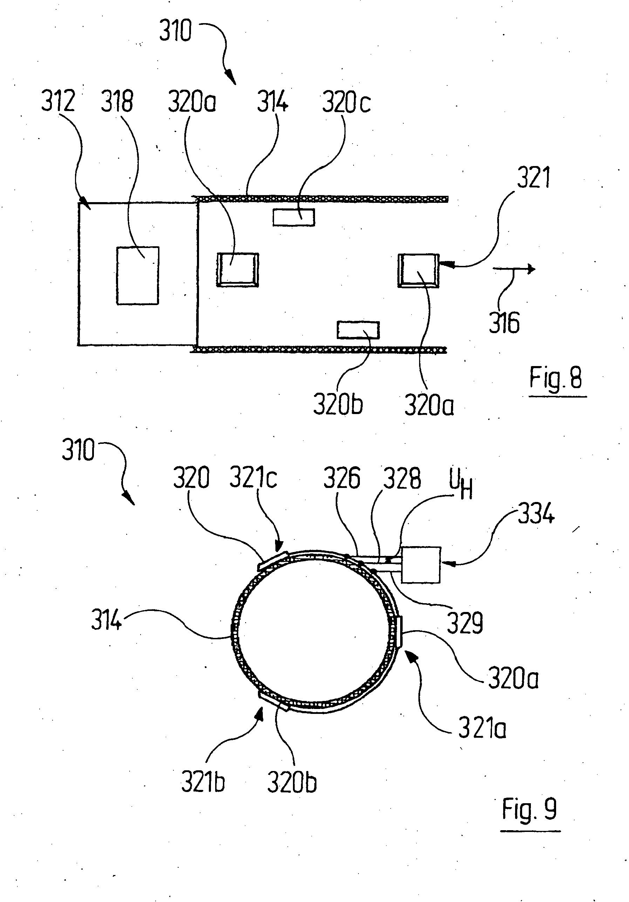

Bei einem vierten Ausführungsbeispiel, dargestellt in den Figuren 8 (Längsschnitt) und 9 (Querschnitt), sind diejenigen Elemente, die zu denen des dritten, in den Figuren 6 und 7 beschriebenen Ausführungsbeispiels ähnlich sind, mit denselben Bezugszeichen zuzüglich 100 versehen, so dass bezüglich deren Beschreibung auf die Ausführungen zum dritten Ausführungsbeispiel Bezug genommen wird. Dieses Ausführungsbeispiel unterscheidet sich von dritten dadurch, dass nur drei Stränge 321a, 321b, 321c von Hall-Schaltern 320a; 320b; 320c im Querschnitt betrachtet (Figur 9) an den Ecken eines gleichseitigen Dreiecks angeordnet sind. Auch hier sind also die Hall-Schalter 320a, 320b, 320c insgesamt entlang einer gedachten Spirale um den Molchschlauch 314 platziert, was analog zum dritten Ausführungsbeispiel eine lückenlose Verfolgung des Molches 312 ermöglicht.

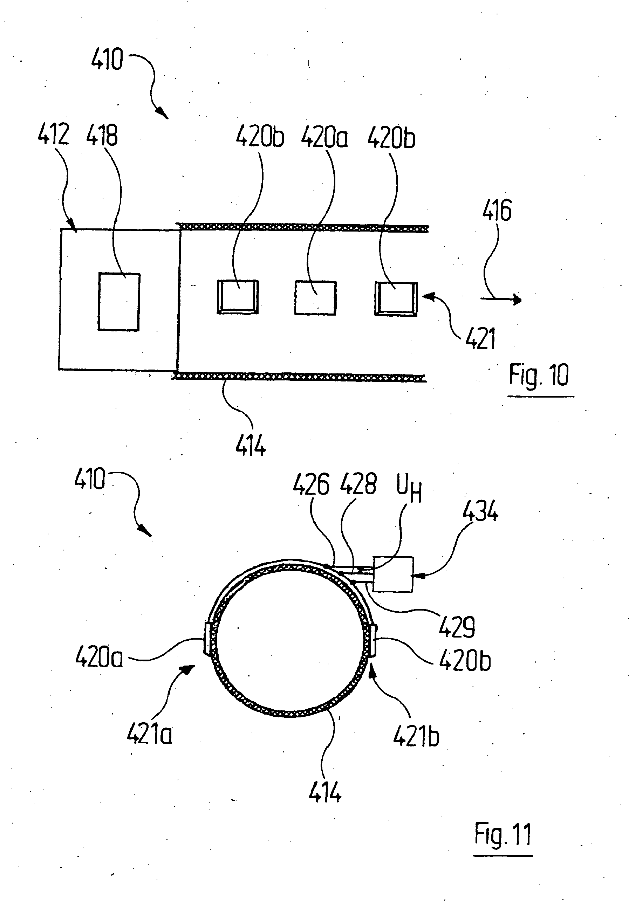

Bei einem fünften Ausführungsbeispiel, dargestellt in den Figuren 10 (Längsschnitt) und 11 (Querschnitt), sind diejenigen Elemente, die zu denen des dritten, in den Figuren 6 und 7 beschriebenen Ausführungsbeispiels ähnlich sind, mit denselben Bezugszeichen zuzüglich 200 versehen, so dass bezüglich deren Beschreibung auf die Ausführungen zum dritten Ausführungsbeispiel Bezug genommen wird. Dieses Ausführungsbeispiel unterscheidet sich von dritten dadurch, dass nur zwei Stränge 421a, 421b von Hall-Schaltern 420a, 420b im Querschnitt betrachtet (Figur 11) auf gegenüberliegenden Umfangsseiten des Molchschlauchs 414 angeordnet sind. Auch hier ermöglicht die versetzte Anordnung der Hall-Schalter 420a, 420b entlang einer gedachten Spirale um den Molchschlauch 414 analog zum dritten Ausführungsbeispiel eine lückenlose Verfolgung des Molches 412.

Bei den oben beschriebenen Ausführungsbeispielen einer Einrichtung zur Molchdetektion sind unter Anderem folgende Modifikationen möglich:

Anstelle eines einzelnen Molches 12; 112; 212; 312; 412 kann auch ein Doppelmolchsystem verwendet werden, bei dem der Lack zwischen zwei Molchen befördert wird. Dabei ist wenigstens einer der Molche von der Art des erfindungsgemäßen Molches 12; 112; 212; 312; 412.

Anstelle des Lacks kann auch ein anderes Beschichtungsmaterial in dem Molchschlauch 14; 114; 214; 314; 414 befördert werden.

Statt direkt um den Molchschlauch 14 gewickelt, kann beim ersten Ausführungsbeispiel (Figuren 1 bis 4) der Spulendraht der Einzelspulen 20 auch um einen Spulenkörper beispielsweise aus Kunststoff gewickelt sein. Der Spulenkörper mit der Spulenwicklung kann dann auf den Molchschlauch 14 gesteckt sein. Der Spulenkörper kann statt aus Kunststoff auch aus einem anderen auch leitfähigen Material sein.

Als Spule kann auch eine sogenannte Backlack-Spule verwendet werden. Dabei handelt es sich um eine Luftspule, deren Wicklungen durch ausgehärteten ("gebackenen") Lack zusammengehalten werden. Ihr Innendurchmesser ist etwas größer als der Außendurchmesser des Molchschlauchs 14, auf den sie daher einfach aufgeschoben werden können.

Anstelle des Ferritkerns 18; 118; 218; 318; 418 kann auch eine andere Magnetfeldquelle vorgesehen sein. Der Molch 12; 112; 212; 312; 412 selbst kann auch vollständig aus einem magnetischen oder magnetisierten Material bestehen, welches im Molchschlauch 14; 114; 214; 314; 414 gleiten kann, aber dennoch dichtend wirkt.

Statt in gleichem Abstand, können beim ersten Ausführungsbeispiel (Figuren 1 bis 4) die Einzelspulen 20 auch elektrisch voneinander isoliert aneinander anliegen, so dass der Molchschlauch 14 lückenlos mit Einzelspulen 20 versehen ist.

Statt mit der Zählerschaltung 34h, 34i oder einer Zählerkarte kann beim ersten Ausführungsbeispiel die Anzahl der Wechselspannungs-Ausgangsimpulse 36 auch mit einem Sinus/Cosinus-Geber ermittelt werden.

Die Komponenten der Schaltungsanordnung 34; 134; 234; 334; 434 können in einem gemeinsamen Gehäuse untergebracht oder separat angeordnet sein.

Anstelle des flexiblen Molchschlauchs 14; 114; 214; 314; 414 kann auch ein starres Molchrohr verwendet werden.

Beim zweiten bis fünften Ausführungsbeispiel können die Hall-Schalter 120; 220; 320; 420 statt außen an der Umfangsseite auch in die Wandung des Molchschlauchs 112; 212; 312; 412 integriert, beispielsweise eingegossen, sein.

## Patentansprüche

1. Einrichtung (10; 110; 210; 310; 410) zur berührungslosen Bestimmung einer Zustandsgröße wenigstens eines Molches (12; 112; 212; 312; 412), der in einem Versorgungsweg (14; 114; 214; 314; 414) verschiebbar ist und der eine Magnetfeldquelle (18; 118; 218; 318; 418) umfasst, mit
a) mehreren auf die Anwesenheit der Magnetfeldquelle (18; 118; 218; 318; 418) ansprechenden Sensoren (20; 120; 20; 320; 420);
b) einer Schaltungsanordnung (34; 134; 234; 334; 434), welcher die Ausgangssignale (U_{A}; U_{H}) der Sensoren (20; 120; 220; 320; 420) zugeführt werden kann und die ein elektrisches Ausgangssignal (40) erzeugt, das für die Zustandsgröße des Molches (12; 112; 212; 312; 412) an den Sensoren (20; 120; 220; 320; 420) repräsentativ ist,
**dadurch gekennzeichnet, dass**
c) eine Vielzahl von parallel geschalteten Sensoren (20; 120; 220; 320; 420) in Bewegungsrichtung (16; 116; 216; 316; 416) des Molches (12; 112; 212; 312; 412) hintereinander entlang des Versorgungsweges (14; 114; 214; 314; 414) angeordnet ist;
d) die Schaltungsanordnung (34; 134; 234; 334; 434) Mittel zur Bestimmung von elektrischen Ausgangssignalen (40), die für wenigstens eine der folgenden Zustandsgrößen des Molches (12; 112; 212; 312; 412) und/oder eines zu fördernden Beschichtungsmaterials repräsentativ sind, aus dem Sensorausgangssignal (U_{A}; U_{H}) aufweist:
da) die Position des Molches (12; 112; 212; 312; 412) auf dem Versorgungsweg (14; 114; 214; 314; 414),
db) die von dem Molch (12; 112; 212; 312; 412) auf dem Versorgungsweg (14; 114; 214; 314; 414) zurückgelegte Wegstrecke,
dc) das mit dem Molch (12; 112; 212; 312; 412) beförderte Volumen an Beschichtungsmaterial,
dd) den Volumenstrom des mit dem Molch (12; 112; 212; 312; 412) beförderten Beschichtungsmaterials.

2. Einrichtung nach Anspruch 1, **dadurch gekennzeichnet, dass** die Sensoren jeweils wenigstens eine Leiterwicklung (20) umfassen, die spulenartig um den Versorgungsweg (14) herum angeordnet ist, deren Enden (22, 24) mit entsprechenden Signaleingängen (30, 32) der Schaltungsanordnung (34) verbunden sind, wobei zwischen den Enden (22, 24) der Leiterwicklung (20) ein die Bewegung des Molches (12) im Bereich der Leiterwicklung (20) charakterisierendes, mit der Magnetfeldquelle (18) induziertes Wechselspannungs-Sensorausgangssignal (U_{A}) anliegt.

3. Einrichtung nach Anspruch 1, **dadurch gekennzeichnet, dass** die Sensoren jeweils ein Hall-Element, insbesondere einen Hall-Schalter (120; 220; 320; 420) umfassen.

4. Einrichtung nach Anspruch 3, **dadurch gekennzeichnet, dass** die Sensoren (220; 320; 420) insbesondere gleichmäßig verteilt, vorzugsweise spiralförmig, um den Versorgungsweg(214; 314; 414) angeordnet sind.

5. Einrichtung nach einem der vorherigen Ansprüche,
**dadurch gekennzeichnet, dass** die Magnetfeldquelle des Molches (12; 112; 212; 312; 412) ein Permanentmagnet oder ein Ferritkern (18; 118; 218; 318; 418) ist.

6. Einrichtung nach einem der vorherigen Ansprüche,
**dadurch gekennzeichnet, dass** die Schaltungsanordnung (34) Mittel (34e) zur Umformung des Wechselspannungs-Sensorausgangssignals (U_{A}) in ein Rechtecksignal (38) aufweist.

7. Einrichtung nach einem der vorherigen Ansprüche,
**dadurch gekennzeichnet, dass** die Schaltungsanordnung (34) Mittel (34d) zur Invertierung des negativen oder des positiven Anteils des Wechselspannungs-Sensorausgangssignals (U_{A}) oder eines hieraus abgeleiteten Wechselspannungssignals aufweist.

8. Einrichtung nach einem der vorherigen Ansprüche,
**dadurch gekennzeichnet, dass** die Schaltungsanordnung (34; 134; 234; 334; 434) Mittel (34h, 34i; 134h; 234h; 334h; 434h) zur Zählung von Sensorausgangssignalen (U_{A}; U_{H}) oder von hieraus abgeleiteten Signalimpulsen (38)aufweist.

9. Einrichtung nach einem der vorherigen Ansprüche,
**dadurch gekennzeichnet, dass** die Schaltungsanordnung (34; 134; 234; 334; 434) ein Zeitglied (34k; 134k; 234k; 334k; 434k) aufweist.

10. Einrichtung nach einem der vorherigen Ansprüche,
**dadurch gekennzeichnet, dass** die Schaltungsanordnung (34) Mittel (34f) zur Erfassung der Reihenfolge von negativen und positiven Anteilen des Wechselspannungs-Sensorausgangssignals (U_{A}) aufweist.

11. Einrichtung nach einem der vorherigen Ansprüche,
**dadurch gekennzeichnet, dass** die parallel geschalteten Sensoren (20; 120; 220; 320; 420) identisch sind.

12. Verfahren zur berührungslosen Bestimmung einer Zustandsgröße wenigstens eines Molches (12; 112; 212; 312; 412), der in einem Versorgungsweg (14; 114; 214; 314; 414) verschoben wird und von dem eine Magnetfeldquelle (18; 118; 218; 318; 418) mitgeführt wird, bei dem
a) mit mehreren Sensoren (20; 120; 220; 320; 420) die Anwesenheit der Magnetfeldquelle (18; 118; 218; 318; 418) erfasst wird;
b) Sensorausgangssignale (U_{A}; U_{H}) der Sensoren (20; 120; 220; 320; 420) einer Schaltungsanordnung (34; 134; 234; 334; 434) zugeführt und mit dieser ein elektrisches Ausgangssignal (40) erzeugt wird, das für diese Zustandsgrößen des Molches (12; 112; 212; 312; 412) an dem Sensor (20; 120; 220; 320; 420) repräsentativ ist,
**dadurch gekennzeichnet, dass**
c) die Anwesenheit der Magnetfeldquelle (18; 118; 218; 318; 418) mit einer Vielzahl von Sensoren (20; 120; 20; 320; 420) erfasst wird, die entlang des Versorgungsweges (14; 114; 214; 314; 414) in Bewegungsrichtung (16; 116; 216; 316; 416) des Molchs (12; 112; 212; 312; 412) hintereinander angeordnet und parallel geschaltet sind;
d) aus den Sensorausgangssignalen (U_{A}; U_{H}) elektrische Ausgangssignale (40), die für wenigstens eine der folgenden Zustandsgrößen des Molches (12; 112; 212; 312; 412) und/oder eines zu fördernden Beschichtungsmaterials repräsentativ sind, ermittelt werden:
da) die Position des Molches (12; 112; 212; 312; 412) auf dem Versorgungsweg (14; 114; 214; 314; 414),
db) die vom Molch (12; 112; 212; 312; 412) auf dem Versorgungsweg (14; 114; 214; 314; 414) zurückgelegte Wegstrecke,
dc) das mit dem Molch (12; 112; 212; 312; 412) beförderte Volumen an Beschichtungsmaterial,
dd) den Volumenstrom des mit dem Molch (12; 112; 212; 312; 412) beförderten Beschichtungsmaterials.

13. Verfahren nach Anspruch 12, **dadurch gekennzeichnet, dass** mit der Magnetfeldquelle (18) in jeweiligen Leiterwicklungen (20) der Sensoren, die spulenartig um den Versorgungsweg (14) herum angeordnet sind, ein die Bewegung des Molches (12) im Bereich der Leiterwicklung (20) charakterisierendes Wechselspannungs-Sensorausgangssignal (U_{A}) induziert wird.

14. Verfahren nach Anspruch 12, **dadurch gekennzeichnet, dass** mit jeweiligen Hall-Elementen, insbesondere Hall-Schaltern (120; 220; 320; 420), eine die Bewegung der Magnetfeldquelle (118; 218; 318; 418) charakterisierende Hallspannung oder ein digitales Ausgangssignal (U_{H}) erzeugt wird.

## Claims

1. Device (10; 110; 210; 310; 410) for non-contacting determination of a state variable of at least one pipeline pig (12; 112; 212; 312; 412) which is displaceable in a supply path (14; 114; 214; 314; 414) and which includes a magnetic-field source (18; 118; 218; 318; 418), with
a) a number of sensors (20; 120; 20; 320; 420) responding to the presence of the magnetic-field source (18; 118; 218; 318; 418);
b) a circuit arrangement (34; 134; 234; 334; 434), to which a sensor-output signal (U_{A}; U_{H}) of the sensor (20; 120; 220; 320; 420) can be supplied and which generates an electrical output signal (40) that is representative of the state variable of the pipeline pig (12; 112; 212; 312; 412) at the sensor (20; 120; 220; 320; 420),
**characterised in that**
c) a plurality of sensors (20; 120; 220; 320; 420) connected in parallel are arranged in succession along the supply path (14; 114; 214; 314; 414) in the direction of motion (16; 116; 216; 316; 416) of the pipeline pig (12; 112; 212; 312; 412);
d) the circuit arrangement (34; 134; 234; 334; 434) includes means for determining electrical output signals (40) from the sensor-output signal (U_{A}; U_{H}) that are representative of at least one of the following state variables of the pipeline pig (12; 112; 212; 312; 412) and/or of a coating material to be conveyed:
da) the position of the pipeline pig (12; 112; 212; 312; 412) on the supply path (14; 114; 214; 314; 414),
db) the distance covered by the pipeline pig (12; 112; 212; 312; 412) on the supply path (14; 114; 214; 314; 414),
dc) the volume of coating material conveyed with the pipeline pig (12; 112; 212; 312; 412),
dd) the volumetric flow rate of the coating material conveyed with the pipeline pig (12; 112; 212; 312; 412).

2. Device according to Claim 1, **characterised in that** the sensors each include at least one conductor winding (20) which is arranged around the supply path (14) in the manner of a coil, the ends (22, 24) of which are connected to corresponding signal inputs (30, 32) of the circuit arrangement (34), wherein between the ends (22, 24) of the conductor winding (20) an a.c. voltage sensor-output signal (U_{A}) is applied which characterises the motion of the pipeline pig (12) in the region of the conductor winding (20) and which is induced with the magnetic-field source (18).

3. Device according to Claim 1, **characterised in that** the sensors each include a Hall element, in particular a Hall switch (120; 220; 320; 420).

4. Device according to Claim 3, **characterised in that** the sensors (220; 320; 420) are arranged around the supply path (214; 314; 414), in particular in uniformly distributed manner, preferably in the form of a helix.

5. Device according to one of the preceding claims,
**characterised in that** the magnetic-field source of the pipeline pig (12; 112; 212; 312; 412) is a permanent magnet or a ferrite core (18; 118; 218; 318; 418).

6. Device according to one of the preceding claims,
**characterised in that** the circuit arrangement (34) includes means (34e) for transforming the a.c. voltage sensor-output signal (U_{A}) into a square-wave signal (38).

7. Device according to one of the preceding claims,
**characterised in that** the circuit arrangement (34) includes means (34d) for inverting the negative component or the positive component of the a.c. voltage sensor-output signal (U_{A}) or of an a.c. voltage signal derived therefrom.

8. Device according to one of the preceding claims,
**characterised in that** the circuit arrangement (34; 134; 234; 334; 434) includes means (34h, 34i; 134h; 234h; 334h; 434h) for counting sensor-output signals (U_{A}; U_{H}) or signal pulses (38) derived therefrom.

9. Device according to one of the preceding claims,
**characterised in that** the circuit arrangement (34; 134; 234; 334; 434) includes a timing element (34k; 134k; 234k; 334k; 434k).

10. Device according to one of the preceding claims,
**characterised in that** the circuit arrangement (34) includes means (34f) for determining the sequence of negative and positive components of the a.c. voltage sensor-output signal (U_{A}).

11. Device according to one of the preceding claims,
**characterised in that** the sensors (20; 120; 220; 320; 420) connected in parallel are identical.

12. Method for non-contacting determination of a state variable of at least one pipeline pig (12; 112; 212; 312; 412) which is displaced in a supply path (14; 114; 214; 314; 414) and by which a magnetic-field source (18; 118; 218; 318; 418) is carried, wherein
a) the presence of the magnetic-field source (18; 118; 218; 318; 418) is determined with a number of sensors (20; 120; 220; 320; 420);
b) sensor-output signals (U_{A}; U_{H}) of the sensors (20; 120; 220; 320; 420) is supplied to a circuit arrangement (34; 134; 234; 334; 434), and with the latter an electrical output signal (40) is generated that is representative of these state variables of the pipeline pig (12; 112; 212; 312; 412) at the sensor (20; 120; 220; 320; 420),
**characterised in that**
c) the presence of the magnetic-field source (18; 118; 218; 318; 418) is determined with a plurality of sensors (20; 120; 20; 320; 420) which are arranged in succession along the supply path (14; 114; 214; 314; 414) in the direction of motion (16; 116; 216; 316; 416) of the pipeline pig (12; 112; 212; 312; 412) and are connected in parallel;
d) from the sensor-output signals (U_{A}; U_{H}) electrical output signals (40) are determined that are representative of at least one of the following state variables of the pipeline pig (12; 112; 212; 312; 412) and/or of a coating material to be conveyed:
da) the position of the pipeline pig (12; 112; 212; 312; 412) on the supply path (14; 114; 214; 314; 414),
db) the distance covered by the pipeline pig (12; 112; 212; 312; 412) on the supply path (14; 114; 214; 314; 414),
dc) the volume of coating material conveyed with the pipeline pig (12; 112; 212; 312; 412),
dd) the volumetric flow rate of the coating material conveyed with the pipeline pig (12; 112; 212; 312; 412).

13. Method according to Claim 12, **characterised in that** in respective conductor windings (20) of the sensors, which are arranged around the supply path (14) in the manner of a coil, an a.c. voltage sensor-output signal (U_{A}) characterising the motion of the pipeline pig (12) in the region of the conductor winding (20) is induced with the magnetic-field source (18).

14. Method according to Claim 12, **characterised in that** a Hall voltage characterising the motion of the magnetic-field source (118; 218; 318; 418) or a digital output signal (U_{H}) is generated with respective Hall elements, in particular Hall switches (120; 220; 320; 420).

## Revendications

1. Dispositif (10 ; 110 ; 210 ; 310 ; 410) de détermination sans contact d'une variable d'état d'au moins un racleur (12 ; 112 ; 212 ; 312 ; 412), qui est mobile en translation dans un parcours d'alimentation (14 ; 114 ; 214 ; 314 ; 414) et qui comprend une source de champ magnétique (18 ; 118 ; 218 ; 318 ; 418), avec
a) plusieurs capteurs (20 ; 120 ; 220 ; 320 ; 420) réagissant à la présence de la source de champ magnétique (18 ; 118 ; 218 ; 318 ; 418) ;
b) un montage électrique (34 ; 134 ; 234 ; 334 ; 434), auquel les signaux de sortie (U_{A} ; U_{H}) des capteurs (20 ; 120 ; 220 ; 320 ; 420) peuvent être apportés et qui produit un signal de sortie électrique (40) qui est représentatif de la variable d'état du racleur (12 ; 112 ; 212 ; 312 ; 412) au niveau des capteurs (20 ; 120 ; 220 ; 320 ; 420),
**caractérisé en ce que**
c) une pluralité de capteurs (20 ; 120 ; 220 ; 320 ; 420) montés en parallèle sont disposés le long du parcours d'alimentation (14 ; 114 ; 214 ; 314 ; 414) les uns à la suite des autres dans la direction de déplacement (16 ; 116 ; 216 ; 316 ; 416) du racleur (12 ; 112 ; 212 ; 312 ; 412) ;
d) le montage électrique (34 ; 134 ; 234 ; 334 ; 434) présente des moyens pour déterminer, à partir du signal de sortie (U_{A} ; U_{H}) des capteurs, des signaux de sortie électriques (40) qui sont représentatifs d'au moins une des variables d'état suivantes du racleur (12; 112; 212; 312; 412) et/ou d'un matériau de revêtement à acheminer :
da) la position du racleur (12; 112; 212; 312 ; 412) sur le parcours d'alimentation (14 ; 114 ; 214 ; 314 ; 414),
db) la distance parcourue par le racleur (12 ; 112 ; 212 ; 312 ; 412) sur le parcours d'alimentation (14 ; 114 ; 214 ; 314 ; 414),
dc) le volume de matériau de revêtement acheminé avec le racleur (12 ; 112 ; 212 ; 312 ; 412),
dd) le débit volumique du matériau de revêtement acheminé avec le racleur (12; 112; 212; 312; 412).

2. Dispositif selon la revendication 1, **caractérisé en ce que** les capteurs comprennent chacun au moins un enroulement conducteur (20), qui est disposé à la manière d'une bobine tout autour du parcours d'alimentation (14) et dont les extrémités (22, 24) sont reliées à des entrées de signal correspondantes (30, 32) du montage électrique (34), sachant qu'un signal de sortie de capteur en tension alternative (U_{A}), induit avec la source de champ magnétique (18) et caractéristique du déplacement du racleur (12) dans la région de l'enroulement conducteur (20), est appliqué entre les extrémités (22, 24) de l'enroulement conducteur (20).

3. Dispositif selon la revendication 1, **caractérisé en ce que** les capteurs comprennent chacun un élément à effet Hall, en particulier un commutateur à effet Hall (120 ; 220 ; 320 ; 420).

4. Dispositif selon la revendication 3, **caractérisé en ce que** les capteurs (220 ; 320 ; 420) sont disposés autour du parcours d'alimentation (214 ; 314 ; 414) en étant notamment uniformément répartis, de préférence en spirale.

5. Dispositif selon l'une des revendications précédentes, **caractérisé en ce que** la source de champ magnétique du racleur (12 ; 112 ; 212 ; 312 ; 412) est un aimant permanent ou un tore de ferrite (18 ; 118 ; 218 ; 318 ; 418).

6. Dispositif selon l'une des revendications précédentes, **caractérisé en ce que** le montage électrique (34) présente des moyens (34e) pour transformer le signal de sortie de capteur en tension alternative (U_{A}) en un signal rectangulaire (3 8).

7. Dispositif selon l'une des revendications précédentes, **caractérisé en ce que** le montage électrique (34) présente des moyens (34d) pour inverser la part négative ou la part positive du signal de sortie de capteur en tension alternative (U_{A}) ou d'un signal en tension alternative qui en est dérivé.

8. Dispositif selon l'une des revendications précédentes, **caractérisé en ce que** le montage électrique (34 ; 134 ; 234 ; 334 ; 434) présente des moyens (34h, 34i ; 134h ; 234h ; 334h ; 434h) pour compter les signaux de sortie (U_{A} ; U_{H}) des capteurs ou des impulsions de signaux (38) qui en sont dérivées.

9. Dispositif selon l'une des revendications précédentes, **caractérisé en ce que** le montage électrique (34 ; 134 ; 234 ; 334 ; 434) présente un organe de temps (34k ; 134k ; 234k ; 334k ; 434k).

10. Dispositif selon l'une des revendications précédentes, **caractérisé en ce que** le montage électrique (34) présente des moyens (34f) pour enregistrer la succession de parts négatives et positives du signal de sortie de capteur en tension alternative (U_{A}).

11. Dispositif selon l'une des revendications précédentes, **caractérisé en ce que** les capteurs (20 ; 120 ; 220 ; 320 ; 420) montés en parallèle sont identiques.

12. Procédé de détermination sans contact d'une variable d'état d'au moins un racleur (12; 112; 212; 312; 412), qui est déplacé en translation dans un parcours d'alimentation (14 ; 114 ; 214 ; 314 ; 414) et qui emporte avec lui une source de champ magnétique (18 ; 118 ; 218 ; 318 ; 418), selon lequel
a) on détecte la présence de la source de champ magnétique (18 ; 118 ; 218 ; 318 ; 418) avec plusieurs capteurs (20 ; 120 ; 220 ; 320 ; 420) ;
b) on apporte les signaux de sortie (U_{A} ; U_{H}) des capteurs (20 ; 120 ; 220 ; 320 ; 5 420) à un montage électrique (34 ; 134 ; 234 ; 334 ; 434), et on produit avec ce dernier un signal de sortie électrique (40) qui est représentatif de ces variables d'état du racleur (12 ; 112 ; 212 ; 312 ; 412) au niveau du capteur (20 ; 120 ; 220 ; 320 ; 420),
**caractérisé en ce que**
c) on détecte la présence de la source de champ magnétique (18 ; 118 ; 218 ; 318 ; 418) avec une pluralité de capteurs (20 ; 120 ; 220 ; 320 ; 420), qui sont montés en parallèle et qui sont disposés le long du parcours d'alimentation (14 ; 114 ; 214 ; 314 ; 414) les uns à la suite des autres dans la direction de déplacement (16; 116 ; 216 ; 316 ; 416) du racleur (12 ; 112 ; 212; 312 ; 412) ;
d) on détermine, à partir des signaux de sortie (U_{A} ; U_{H}) des capteurs, des signaux de sortie électriques (40) qui sont représentatifs d'au moins une des variables d'état suivantes du racleur (12 ; 112 ; 212 ; 312 ; 412) et/ou d'un matériau de revêtement à acheminer :
da) la position du racleur (12 ; 112 ; 212 ; 312 ; 412) sur le parcours d'alimentation (14 ; 114 ; 214 ; 314 ; 414),
db) la distance parcourue par le racleur (12 ; 112 ; 212 ; 312 ; 412) sur le parcours d'alimentation (14 ; 114 ; 214 ; 314 ; 414),
dc) le volume de matériau de revêtement acheminé avec le racleur (12 ; 112 ; 212 ; 312 ; 412),
dd) le débit volumique du matériau de revêtement acheminé avec le racleur (12 ; 112 ; 212 ; 312 ; 412).

13. Procédé selon la revendication 12, **caractérisé en ce qu'**avec la source de champ magnétique (18), on induit dans des enroulements conducteurs respectifs (20) des capteurs, qui sont disposés à la manière de bobines tout autour du parcours d'alimentation (14), un signal de sortie de capteur en tension alternative (U_{A}) caractéristique du déplacement du racleur (12) dans la région de l'enroulement conducteur (20).

14. Procédé selon la revendication 12, **caractérisé en ce qu'**avec des éléments respectifs à effet Hall, en particulier des commutateurs à effet Hall (120 ; 220 ; 320 ; 420), on produit un signal de sortie numérique (U_{H}) ou une tension de Hall caractéristique du déplacement de la source de champ magnétique (118 ; 218 ; 318 ; 418).
